# EUROPÄISCHE PATENTANMELDUNG

(11) **EP 1 306 259 A2**
(43) Veröffentlichungstag der Anmeldung: **02.05.2003**
(21) Anmeldenummer: 02020955.7
(22) Anmeldetag: 19.09.2002
(51) Int. Cl.: B60K 15/03

(54) **Kraftstoffbehälter für ein Kraftfahrzeug**

(30) Priorität: 23.10.2001 DE 10152131
(71) Anmelder: SIEMENS AKTIENGESELLSCHAFT, 80333 München (DE)
(72) Erfinder: Meyer, Knut, Dr., 45239 Essen (DE); Reiter, Frank, 65812 Bad Soden (DE); Schier, Holger, 45359 Essen (DE); Trappmann, Heinz-Werner, 44309 Dortmund (DE); Wanka, Hartwig, Dr., 40489 Düsseldorf (DE)

(57) **Zusammenfassung**

Bei einem Kraftstoffbehälter für ein Kraftfahrzeug mit dichtend miteinander verbundenen Schalen (1, 2) sind nahe einer Schweißnaht (5) Positioniermittel (6, 7) angeordnet. Die Positioniermittel (6, 7) ermöglichen ein passgenaues Fügen der Schalen (1, 2) vor der Verschweißung. Hierdurch lässt sich der Kraftstoffbehälter besonders kostengünstig fertigen.

## Beschreibung

Die Erfindung betrifft einen Kraftstoffbehälter für ein Kraftfahrzeug mit zumindest zwei miteinander stoffschlüssig verbundenen Schalen.

Solche Kraftstoffbehälter werden in heutigen Kraftfahrzeugen häufig eingesetzt und sind aus der Praxis bekannt. Die Schalen des bekannten Kraftstoffbehälters werden beispielsweise aus Metall im Tiefziehverfahren gefertigt und weisen jeweils einen umlaufenden Rand auf. An den umlaufenden Rändern zweier gegenüberstehender Schalen wird der Kraftstoffbehälter dichtend verschweißt. Die Schalen weisen jedoch fertigungsbedingte Toleranzen auf, die dazu führen, dass die Ränder beim Fügen der Schalen vor der Verschweißung zueinander versetzt sind.

Um eine prozesssichere Verschweißung zu gewährleisten, darf der Versatz einen definierten Betrag nicht überschreiten. In der Praxis behilft man sich damit, dass der Versatz beispielsweise durch spanende Bearbeitung auf das erforderliche Maß gebracht wird. Dieses Verfahren ist jedoch kostenaufwändig und kann die Schweißnahtqualität durch Metallpartikel verschlechtern.

Der Erfindung liegt das Problem zugrunde, einen Kraftstoffbehälter der eingangs genannten Art so zu gestalten, dass er möglichst kostengünstig mit einer hohen Qualität gefertigt werden kann.

Dieses Problem wird erfindungsgemäß dadurch gelöst, dass an den miteinander stoffschlüssig zu verbindenden Bereichen der Schalen Positioniermittel angeordnet sind.

Durch diese Gestaltung werden beim Fügen der Schalen Toleranzen durch geringfügiges Biegen von an die Positioniermittel angrenzenden Bereichen der Schalen ausgeglichen. Daher lassen sich die miteinander zu verschweißenden Bereiche durch die Positioniermittel genau übereinander bringen. Die Anordnung der Positioniermittel an den miteinander zu verschweißenden Bereichen hat den Vorteil, dass nunmehr schweißtechnisch beherrschbare Toleranzen zwischen den Positioniermitteln und den miteinander zu verschweißenden Bereichen entstehen können. Eine Bearbeitung der Schalen nach dem Fügen der Schalen ist dank der Erfindung nicht erforderlich. Daher lässt sich der erfindungsgemäße Kraftstoffbehälter mit einem geringen Kostenaufwand und einer hohen Qualität fertigen. Ein weiterer Vorteil dieser Gestaltung besteht darin, dass die Positioniermittel in der Ebene der miteinander zu verschweißenden Bereiche auftretende Kräfte aufnehmen können. Hierdurch wird die stoffschlüssige Verbindung der Schalen von Scherkräften entlastet.

Der Aufwand für die Verschweißung und die Erzeugung der Positioniermittel lässt sich gemäß einer anderen vorteilhaften Weiterbildung der Erfindung besonders gering halten, wenn die Positioniermittel auf aneinander anliegenden und zur Verschweißung vorgesehenen Rändern der Schalen angeordnet sind.

Die Positioniermittel können beispielsweise durch Ausnehmungen der Schalen hindurchzuführende Bolzen aufweisen. Zur weiteren Verringerung der Herstellungskosten des erfindungsgemäßen Kraftstoffbehälters trägt es jedoch bei, wenn die Positioniermittel einstückig mit den Schalen gefertigt sind. Die Schalen fixieren sich zueinander bei ihrem Fügen vor der Verschweißung.

Die Positioniermittel können gemäß einer anderen vorteilhaften Weiterbildung der Erfindung durch einfaches Prägen der Schalen bei ihrer Fertigung im Tiefziehverfahren erzeugt werden, wenn die Positioniermittel im Wesentlichen dieselbe Materialstärke aufweisen wie daran angrenzende Bereiche der Schalen. Dies trägt zur weiteren Verringerung der Fertigungskosten des erfindungsgemäßen Kraftstoffbehälters bei.

Die Positioniermittel könnten beispielsweise an einer der Schalen als umlaufender Rand ausgebildet sein und den Rand der anderen Schale seitlich umgreifen. Die Schalen des erfindungsgemäßen Kraftstoffbehälters lassen sich jedoch einfach wie bei dem bekannten Kraftstoffbehälter verschweißen, wenn die Positioniermittel an einer der Schalen hervorstehend und an der anderen Schale entsprechend den hervorstehenden Positioniermitteln komplementär gestaltet sind.

Die Positioniermittel gestalten sich gemäß einer anderen vorteilhaften Weiterbildung der Erfindung konstruktiv besonders einfach, wenn die Positioniermittel als umlaufende Sicke ausgebildet sind.

Das Fügen der Schalen vor der Verschweißung gestaltet sich gemäß einer anderen vorteilhaften Weiterbildung der Erfindung besonders einfach, wenn die Positioniermittel als einzelne Nasen ausgebildet sind.

Die Erfindung lässt zahlreiche Ausführungsformen zu. Zur weiteren Verdeutlichung ihres Grundprinzips sind zwei davon in der Zeichnung dargestellt und werden nachfolgend beschrieben. Diese zeigt in
- Fig.1: schematisch einen Teilbereich eines erfindungsgemäßen Kraftstoffbehälters mit zwei miteinander verschweißten Schalen,
- Fig.2: einen Teilbereich zweier miteinander verschweißter Schalen einer weiteren Ausführungsform des erfindungsgemäßen Kraftstoffbehälters.

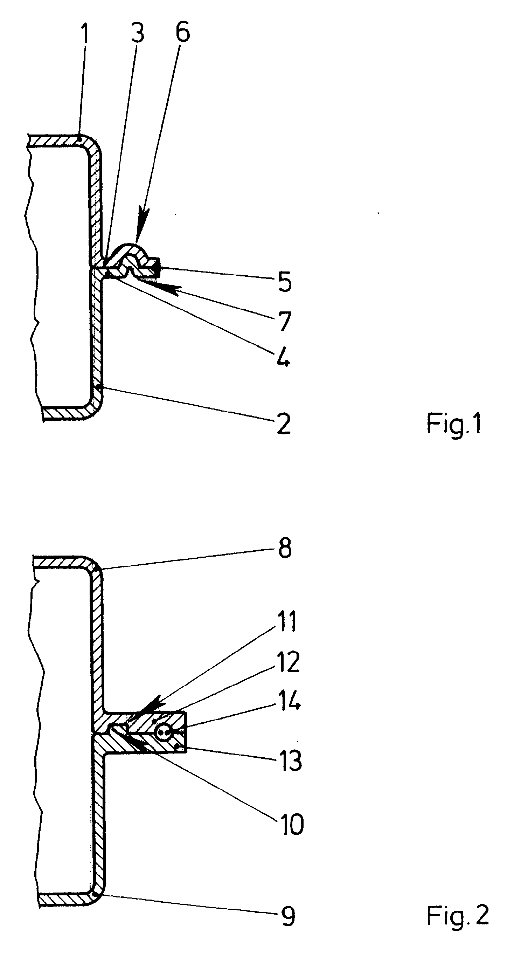

Figur 1 zeigt eine Schnittdarstellung durch einen seitlichen Teilbereich eines Kraftstoffbehälters mit zwei Schalen 1, 2. Die Schalen 1, 2 sind aus Blech im Tiefziehverfahren gefertigt und weisen an ihren aneinanderliegenden Bereichen jeweils einen Rand 3, 4 auf. An der Kante der Ränder 3, 4 sind die Schalen 1, 2 über eine Schweißnaht 5 dichtend miteinander verbunden. Im mittleren Bereich der Ränder 3, 4 weisen die Schalen 1, 2 jeweils miteinander korrespondierende Positioniermittel 6, 7 auf. Die Positioniermittel 7 der einen Schale 2 sind als umlaufende hervorstehende Sicke ausgebildet. Die Positioniermittel 6 der anderen Schale 1 sind als der umlaufenden Sicke entsprechend geformte Einwölbung ausgebildet. Die Positioniermittel 6, 7 ermöglichen ein passgenaues Fügen der beiden Schalen 1, 2 vor der Verschweißung. Weiterhin stützen die Positioniermittel 6, 7 im verschweißten Zustand des Kraftstoffbehälters in der Ebene der Ränder 3, 4 auf die Schalen 1, 2 einwirkende Kräfte ab.

Figur 2 zeigt ebenfalls in einer Schnittdarstellung einen seitlichen Bereich einer weiteren Ausführungsform des Kraftstoffbehälters mit zwei Schalen 8, 9. Die Schalen 8, 9 sind aus Kunststoffspritzguss gefertigt. Eine der Schalen 9 hat als einzelne Nasen ausgebildete Positioniermittel 10, während die andere der Schalen 8 als den Nasen entsprechend gestaltete Ausnehmungen ausgebildete Positioniermittel 11 hat. Nahe der äußeren Kante der die Positioniermittel tragenden Ränder 12, 13 der Schalen 8, 9 ist ein Heizdraht 14 angeordnet. Zur dichtenden Verschweißung der Schalen 8, 9 wird der Heizdraht 14 bestromt und schmilzt die Ränder 12, 13 an. Dabei werden die Ränder 12, 13 miteinander stoffschlüssig und dicht verbunden.

## Patentansprüche

1. Kraftstoffbehälter für ein Kraftfahrzeug mit zumindest zwei miteinander stoffschlüssig verbundener Schalen, **dadurch gekennzeichnet, dass** an den miteinander stoffschlüssig zu verbindenden Bereichen der Schalen (1, 2, 8, 9) Positioniermittel (6, 7, 10, 11) angeordnet sind.

2. Kraftstoffbehälter nach Anspruch 1, **dadurch gekennzeichnet, dass** die Positioniermittel (6, 7, 10, 11) auf aneinander anliegenden und zur Verschweißung vorgesehenen Rändern (3, 4, 12, 13) der Schalen (1, 2, 8, 9) angeordnet sind.

3. Kraftstoffbehälter nach Anspruch 1 oder 2, **dadurch gekennzeichnet, dass** die Positioniermittel (6, 7, 10, 11) einstükkig mit den Schalen (1, 2, 8, 9) gefertigt sind.

4. Kraftstoffbehälter nach zumindest einem der vorhergehenden Ansprüche, **dadurch gekennzeichnet, dass** die Positioniermittel (1, 2) im Wesentlichen dieselbe Materialstärke aufweisen wie daran angrenzende Bereiche der Schalen (1, 2).

5. Kraftstoffbehälter nach zumindest einem der vorhergehenden Ansprüche, **dadurch gekennzeichnet, dass** die Positioniermittel (7, 10) an einer der Schalen (2, 9) hervorstehend und an der anderen Schale (1, 8) entsprechend den hervorstehenden Positioniermitteln (7, 10) komplementär gestaltet sind.

6. Kraftstoffbehälter nach zumindest einem der vorhergehenden Ansprüche, **dadurch gekennzeichnet, dass** die Positioniermittel (7) als umlaufende Sicke ausgebildet sind.

7. Kraftstoffbehälter nach zumindest einem der vorhergehenden Ansprüche, **dadurch gekennzeichnet, dass** die Positioniermittel (10) als einzelne Nasen ausgebildet sind.
